(19) Europäisches Patentamt
European Patent Office
Office européen des brevets

(11) EP 0 717 757 B1

(12) **FASCICULE DE BREVET EUROPEEN**

(45) Date de publication et mention de la délivrance du brevet:
**17.12.1997 Bulletin 1997/51**

(21) Numéro de dépôt: **94926279.4**

(22) Date de dépôt: **06.09.1994**

(51) Int Cl.[6]: **C08G 77/38**, C07F 7/08

(86) Numéro de dépôt international:
**PCT/FR94/01047**

(87) Numéro de publication internationale:
**WO 95/07312 (16.03.1995 Gazette 1995/12)**

(54) **PROCEDE DE PREPARATION DE POLYORGANOSILOXANE A FONCTIONS INSATUREES PAR DESHYDROGENOCONDENSATION EN PRESENCE DE COMPLEXES DE TITANE, ZIRKONIUM OU HAFNIUM**

VERFAHREN ZUR HERSTELLUNG VON UNGESAETTIGTEN ORGANOPOLYSILOXANEN DURCH DEHYDROGENIERUNGSCONDENSATION IN GEGENWART VON TITAN-, ZIRKON- ODER HAFNIUM-KOMPLEXEN

METHOD FOR THE PREPARATION OF POLYORGANOSILOXANES WITH INSATURATED FUNCTIONS BY DEHYDROGENOCONDENSATION IN THE PRESENCE OF COMPLEXES OF TITANIUM, ZIRKONIUM OR HAFNIUM

(84) Etats contractants désignés:
**AT BE CH DE ES FR GB IE IT LI NL**

(30) Priorité: **07.09.1993 FR 9310627**

(43) Date de publication de la demande:
**26.06.1996 Bulletin 1996/26**

(73) Titulaire: **RHONE-POULENC CHIMIE**
**92408 Courbevoie Cédex (FR)**

(72) Inventeurs:
- **CHOUKROUN, Robert**
  **F-31000 Toulouse (FR)**
- **FRANCES, Jean-Marc**
  **F-69330 Meyzieu (FR)**
- **SOLEIL, Frédérique**
  **F-31400 Toulouse (FR)**

(74) Mandataire: **Trolliet, Maurice et al**
**RHONE-POULENC CHIMIE,**
**Direction de la Propriété Industrielle,**
**CRIT Carrières,**
**B.P. 62**
**69192 Saint-Fons Cédex (FR)**

(56) Documents cités:

| | |
|---|---|
| **DE-A- 2 033 661** | **GB-A- 1 365 431** |
| **US-A- 4 355 149** | **US-A- 4 668 812** |
| **US-A- 4 780 337** | **US-A- 5 087 719** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 717 757 B1

Printed by Jouve, 75001 PARIS (FR)

## Description

La présente invention a pour objet un procédé de préparation de polyorganosiloxanes à fonctions insaturées, par déshydrogénocondensation de polyorganohydrogénosiloxanes et de composés hydrocarbonés ethyléniquement et/ou acétyléniquement insaturés, en présence de complexes de titane, zirconium ou hafnium.

Il est connu d'après GB-A-1 365 431 de préparer des polyorganosiloxanes à fonctions insaturées par déshydrogénocondensation de polyorganohydrogénosiloxanes et de composés éthyléniquement insaturés en présence d'un complexe du nickel. Le nickel est un métal de transition qui conduit à des complexes dont les résidus catalytiques obtenus après réaction peuvent poser des problèmes de toxicité et de recyclage.

Le document US-A-5 087 719 décrit un procédé de polymérisation mettant en oeuvre une réaction de déshydrogénocondensation réalisée, en présence à'un complexe de zirconium ou d'hafnium, sur des silanes (et non pas des polysiloxanes) hydrogénés. Cette réaction ne fait pas intervenir de composés hydrocarbonés insaturés et elle ne concerne pas l'obtention de polyorganosiloxanes à fonctions insaturées.

Selon l'invention, il s'agit d'un procédé de préparation de polyorganosiioxanes à fonctions insaturées caractérisé en ce qu'on fait réagir un polyorganohydrogénosiloxane (A) contenant au moins 0,1% molaire, de préférence de l'ordre de 1% à 20% molaire, d'atomes d'hydrogène liés directement au silicium ("SiH"), avec au moins une quantité stoechiométrique d'un composé hydrocarboné (B) présentant au moins une insaturation éthylénique ou acétylénique, en présence d'une quantité catalytiquement efficace d'un catalyseur de déshydrogénocondensation constitués d'un complexe de métal de formule (I)

$$L_n\ M\ R_x Y_y \qquad (I)$$

formule où

- M représente un métal choisi entre le titane, le zirconium et l'hafnium ;
- les symboles L sont semblables ou différents et représentent un ligand hydrocarboné du métal M, ledit ligand étant donneur de 3 à 8 électrons $\pi$ sur la couche de valence dudit métal ;
- $\underline{n}$ est un nombre entier allant de 0 à 3 ;
- les symboles R sont semblables ou différents et représentent un ligand hydrocarboné ou organosilicié du métal M, ledit ligand étant donneur d'électrons $\sigma$ ;
- les symboles Y sont semblables ou différents et représentent un ligand formant avec le métal M une liaison covalente ;
- $\underline{x}$ est un nombre entier allant de 0 à 4 ;
- $\underline{y}$ est un nombre entier allant de 0 à 4 ;

les valeurs respectives des nombres $\underline{n}$, $\underline{x}$ et $\underline{y}$ étant telles que le nombre d'électrons de la couche de valence du métal M complexé scit inférieur ou égal à 18 et de préférence supérieur ou égal à 8.

Parmi les ligands L on peut citer par exemple les $\eta^3$-allyl, $\eta^5$-cyclopentadienyl, $\eta^7$-cycloheptatrienyl substitués ou non, $\eta^6$ aromatiques tels que $\eta^6$ benzène substitué ou non.

Parmi les ligands R on peut citer par exemple les groupes alkyles en $C_1$-$C_8$, aryles en $C_6$-$C_{12}$.

Parmi les ligands Y on peut citer par exemple les atomes d'hydrogène, d'halogènes (chlore, fluor, brome, iode), les groupes alcoxy en $C_1$-$C_4$.

A titre d'exemples de complexes, on peut citer les

- bis(cyclopentadienyl)di1-butylzirconium
- tetrabenzylzirconium
- tetraneopentylzirconium
- butoxytris((trimethylsilyl)methyl)zirconium
- dinorbornyldimethyltiianium
- bis(cyclopentadienyl)dimethylzirconium
- cyclopentadienyltribenzylzirconium
- cyclopentadienyltrimethyltitanium
- cyclopentadienyltrimethylzirconium
- bis(cyclopentadienyl)dineopentyltitanium
- cyclopentadienyldiphenylisopropoxyzirconium
- ((trimethylsilyl)cyclopentadienyl)trimethylzirconium

- bis(cyclopentadienyl)di(trimethylsilyl)zirconium
- bis(cyclopentadienyl)dihydrogénozirconium
- bis(cyclopentadienyl)dihydrogénotitanium
- bis(cyclopentadienyl)chlorohydrogénozirconium
- bis(cyclopentadienyl)butylhydrogénozirconium
- bis(cyclopentadienyl)méthylhydrogénozirconium

Ledit polyorganohydrogénosiloxane (A) mis en oeuvre peut être linéaire, cyclique ou tridimensionnel. Il contient des motifs semblables ou différents de formule (II)

$$R'_a\ H_b\ Si\ O_{(4-a-b)/2} \qquad (II)$$

où

- les symboles R' semblables ou différents représentent un groupe alkyle en $C_1$-$C_{18}$, un groupe vinyle, un groupe aryle ou aralkyle en $C_6$-$C_{12}$, éventuellement substitué par des atomes d'halogène (fluor notamment), de préférence au moins 60% molaire desdits radicaux R' représentant un groupe méthyle ;
- a est égal à 0,1, 2, ou 3 ;
- b est égal à 0 ou 1;
- a+b = 0, 1, 2, ou 3 ;

le taux de motifs $SiO_{4/2}$ étant inférieur à 30% en mole le nombre de motifs de formule (II) dans lesquels b est différent de 0 étant tel que ledit polyorganohydrogénosiloxane (A) contienne au moins 0,1% molaire, de préférence de l'ordre de 1% à 20% molaire, d'atomes d'hydrogène liés directement au silicium ("SiH").

Celui-ci est de préférence liquide ; sa viscosité dynamique à 25°C peut aller jusqu'à 1.000.000mPa.s. ; celle-ci est généralement de l'ordre de 1 à 10.000m Pa.s.

La viscosité dynamique à 25°C des polymères silicones peut être mesurée à l'aide d'un viscosimètre BROOKFIELD selon la norme AFNOR NFT 76 102 de février 1992.

Parmi les composés hydrocarbonés insaturés (B) pouvant être mis en oeuvre on peut citer par exemple les alcènes linéaires ou ramifiés en $C_2$-$C_{24}$, cycloalcènes en $C_6$-$C_{12}$, les alcynes linéaires ou ramifiés en $C_2$-$C_{24}$, éventuellement substitués par un ou plusieurs atomes d'halogène et/ou par un ou plusieurs groupements aryles en $C_6$-$C_{12}$, les esters saturés d'acides carboxyliques éthyléniquement insaturés, les esters insaturés d'acides carboxyliques saturés, les organosilanes ou organosiloxanes portant des groupements insaturés éthyléniques ou acétyléniques.
A titre d'exemple on peut citer : l'éthylène, l'octène-1, le butadiène-1,4, l'hexadiène-1,5, le decadiène-1,9, les oléfines perfluorées de formule $CF_3$-$(CF_2)_{0-6}$-$(CH_2)_{0-6}$-$CH=CH_2$, le cyclooctadiène-1,5, l'acétylène, l'hexyne-1, le styrène, l'acrylate d'éthyle, le vinyltriméthylsilane, le 1,3-divinyltetraméthyldisiloxane, le cyclopentadiène et dimère.

Dans la définition de la mole de polyorganohydrogénosiloxane (A), on considérera comme entité élémentaire l'atome d'hydrogène lié directement au silicium ("SiH").

Dans la définition de la mole de composé hydrocarboné insaturé (B), on considérera comme entité élémentaire l'insaturation éthylénique ou acétylénique susceptible de former avec une fonction "SiH" de (A) un couplage déshydrogénant. A titre d'exemple, le schéma reactionnel de déshydrogénocondensation est le suivant lorsque le composé hydrocarboné insaturé (B) est une alphaoléfine :

$$Si\text{-}H\ [de\ (A)] + H_2C{=}CH\text{-}R''\ [de\ (B)] \rightarrow Si\text{-}CH{=}CH\text{-}R'' + H_2$$

Ledit procédé faisant l'objet de l'invention est favorablement réalisé en mettant en oeuvre un excès de constituant (B) par rapport à la stoechiométrie.

Cet excès correspond de préférence à un rapport molaire (B)/(A) de l'ordre de 1,1 à 100, de préférence de l'ordre de 1,1 à 1,0.

Par quantité catalytiquement efficace de catalyseur de déshydrogénocondensation , on entend une quantité suffisante pour assurer une réaction de déshydrogénocondensation convenable.

Ledit catalyseur est généralement mis en oeuvre selon des quantités de l'ordre de $1.10^{-5}$ mole à 0,5 mole, de préférence de l'ordre de $1.10^{-4}$ mole à 0,1 mole pour 100 moles de polyorganohydrogénosiloxane (A).

La préparation du catalyseur ou complexe de formule (I) est basée sur la réduction chimique d'un précurseur approprié du complexe de formule (I), se présentant lui-même sous forme d'un complexe métallique halogéné, par le

magnésium en présence de THF (tétrahydrofuranne) ou par les alkyles lithium en solution dans un hydrocarbure saturé. D'autres agents réducteurs tels que Li-, Na- ou K-M (M=naphtalène), $M'BH_4$, (M'=Li, Na, K), un composé alkyl-Mg-halogène, $NaAlH_2(OCH_2CH_2OCH_3)_2$, $LiAlH_4$, $LiAlH(alkoxy)_3$, $LiHBR_3$, $MgH_2$, Al, Zn, $AlCl_{3-z}(R)_z$ avec z étant un nombre allant de 0 à 2 peuvent être utilisés.

L'opération de déshydrogénocondensation peut être réalisée à une température de l'ordre de 0 à 200°C, de préférence de l'ordre de 20 à 150°C.

Un solvant peut être présent pour diminuer la viscosité du milieu ; à titre d'exemple on peut citer les hydrocabures aromatiques, aliphatiques ou cycloaliphatiques tels que toluène, hexane, cyclohexane.

Les exemples suivants sont donnés à titre illustratif.

**Exemple 1:**

Dans un ballon tricol de capacité 250 $cm^3$ on introduit à température ambiante :

- $2.10^{-4}$ mole de $Cp_2ZrCl_2$
  ( Cp = $\eta^5$ Cyclopentadiényle)
- 15 ml de toluène désaéré sous argon
- $3{,}8.10^{-4}$ mole de butyllithium sous forme d'une solution dans l'hexane contenant 1,6 moles de butyllithium par litre,

ce qui correspond à un rapport molaire BuLi/ $Cp_2ZrCl_2$ de 1,9.

On laisse le milieu catalytique à température ambiante sous agitation magnétique pendant 20 mn. On ajoute aiors très rapidement 4,1 g de polydiméthylsiloxane $\alpha.\omega$ diméthylhydrogénosilyle de poids moléculaire (Mn = 1022), soit $8.10^{-3}$ mole de fonction hydrogénosilyle.

On ajoute ensuite 230 $cm^3$ d'éthylène à pression atmosphérique, soit $9{,}5.10^{-3}$ mole d'éthylène.

On porte le milieu à 100°C pendant 7 heures et on récupère un milieu réactionnel limpide. Le toluène est éliminé sous 30Pa à 75°C. Le polymère obtenu est ensuite analysé par R.M.N $^1$H.

On observe un taux de transformation de 100 % des motifs SiH ainsi que la formation d'un polymère de structure polydiméthylsiloxane $\alpha$-$\omega$ diméthylvinyl. La proportion de motifs vinyliques hydrogénés est inférieure à 5 % molaire.

**Exemple 2 :**

On répète l'opération décrite à l'exemple 1 pendant 5 heures à 90°C à l'aide d'un taux de catalyseur de $2{,}3.10^{-4}$ mole, le rapport BuLi / $Cp_2ZrCl_2$ étant toujours de 1,9.

Le taux de transformation des motifs SiH est de 81 %.

| | |
|---|---|
| L'analyse RMN $^{29}$Si révèle | 75% molaire de motifs SiVi |
| | 15% molaire de motifs $Si\text{-}CH_2\text{-}CH_3$ |
| | 10% molaire de motifs $Si\text{-}CH_2\text{-}CH_2\text{-}Si$ |

**Exemple 3:**

Dans un ballon de 25 ml on introduit $2{,}36.10^{-4}$ mole de $Cp_2ZrCl_2$ ; 5 ml de toluène et $4{,}48.10^{-4}$ mole de butyl lithium. On laisse le mélange sous agitation pendant 25 mn à 20°C. On ajoute $1{,}98.10^{-2}$ mole de styrène fraîchement distillé et du polydiméthylsiloxane $\alpha$-$\omega$ diméthylhydrogénosilyle de l'exemple 1 en quantité correspondant à $9.10^{-3}$ mole de fonctions hydrogénosilyles. On chauffe le milieu à 95-100°C pendant 7 heures. L'huile obtenue après dévolatilisation est analysée par R.M.N$^1$ H.

Le taux de transformation des fonctions hydrogénosilyles est de 100 %. On obtient plus de 90% molaire d'une huile correspondant à la structure moyenne suivante :

$$Ph\text{-}CH{=}CH\text{-}Si\,(Me)_2\text{-}O\text{-}[Si(Me)_2\text{-}O]_{12}\text{-}Si(Me)_2\text{-}CH{=}CH\text{-}Ph \text{ trans}$$

(Ph = phényle ; Me = méthyle)

**Exemple 4:**

Dans un ballon tricol de 25 ml on introduit :

- $2,4.10^{-3}$ mole de $Cp_2ZrCl_2$
- 15 ml de toluène
- $4,6.10^{-3}$ mole de butyl lithium

On laisse le milieu catalytique à température ambiante sous agitation, sous argon pendant une heure.

On ajoute alors un mélange renfermant 3 g du polydiméthylsiloxane α-ω diméthylhydrogénosilyle décrit à l'exemple 1 (soit $6.10^{-3}$ mole de fonctions hydrogénosilyle) et 13,5 g d'octène-1 (soit $0,12.10^{-1}$ mole).

On porte le milieu à 90°C pendant 7 heures. On élimine sous vide de 500Pa à 50°C l'excès d'octène et le toluène.

L'analyse de l'huile par R.M.N $^1H$ et $^{29}Si$ indique la formation majoritaire d'une huile polyméthylsiloxane α-ω octényle.

Le taux de transformation des motifs hydrogénosilyle est supérieur à 95 %.

L'analyse RMN $^{29}Si$ dans $(CH_3)_4Si$ comme solvant révèle les déplacements chimiques à en ppm (parties par millions) suivants:

δ = 7,4ppm 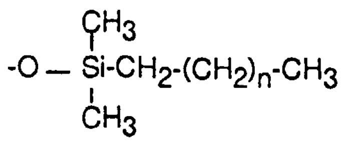

ou 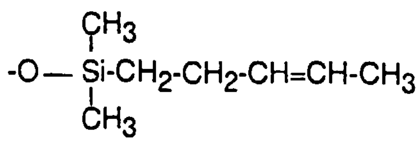

soit 5,1% molaire

δ = 5,07ppm 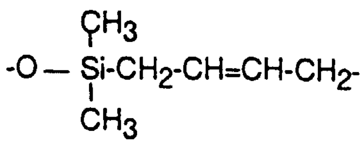

δ = 4,74ppm 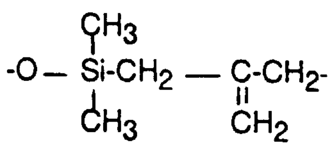

soit 7,4% molaire

δ = -3,89ppm 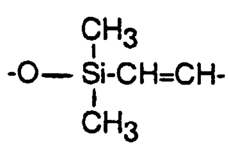

soit 1,3% molaire

δ = -20,7ppm à -22,6ppm

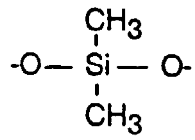

soit 86,1% molaire

**Exemple 5:**

Le catalyseur est préparé à partir d'une solution mère de $Cp_2ZrCl_2$ (0,150 g, $5,13.10^{-4}$ mole), Mg (0,052 g, $2,14.10^{-3}$ mole) dans 6 ml de THF en présence de 1,3 g de styrène $PhCH=CH_2$ (soit $1,25.10^{-2}$ mole). La solution est agitée à température ambiante pendant 3 heures et la solution finale est de couleur rouge.

a)

Dans un schlenk de 50 ml, on introduit successivement 1,5 ml de la solution mère précédente, soit $1,03.10^{-4}$ mole de $Cp_2ZrCl_2$ (0,030 g), 5 ml de THF, 2,42 g de styrène ($2,32.10^{-2}$ mole soit au total $2,58.10^{-2}$ mole) et 5,16 g du composé siloxane de l'exemple 1 (5,16 g soit $1,03.10^{-2}$ mole de SiH). La solution est chauffée à 90°C pendant dix heures. On récupère une solution limpide. Après évaporation de la solution de THF, la RMN $^1H$ dans $CDCl_3$ de l'huile siloxane montre les protons correspondant au greffage en trans du styrène sur les liaisons Si-H de l'huile de départ, par déshydrogénocondensation et la disparition des pics relatifs aux Si-H de l'huile de départ. On obtient une huile polydiméthylsiloxane de formule moyenne :

$$Ph\text{-}CH=CH\text{-}SiMe_2\text{-}[SiMe_2O]_{12}\text{-}SiMe_2\text{-}CH=CH\text{-}Ph$$

Le taux de transformation des liaisons Si-H est de 100 % pour un rapport [Si-H]/ [calyseur] = 100, [styrène]/[SiH] = 2,74.

b)

Le même processus expérimental a été utilisé pour 5,20 g de styrène ($5.10^{-2}$ mole soit au total $5,25.10^{-2}$ mole), 10,2 g du polydiméthylsiloxane α-ω hydrogénodiméthylsilyle de l'exemple 1 ($2,04.10^{-2}$ mole de SiH) et ajout de 15 ml de THF. Le taux de transformation des liaisons Si-H est de 100 % pour un rapport [Si-H]/ [calyseur] = 198, [styrène]/ [SiH] = 2,7.

c)

Le même processus expérimental a été utilisé pour 4,23 g de styrène ($4,07.10^{-2}$ mole soit au total $4,33.10^{-2}$ mole), 2,88 g d'une huile polypolydiméthylméthylhydrogénosiloxane de formule moyenne $Me_3SiO\text{-}[SiMe_2O]_{9,1}\text{-}[SiMe(H)O]_4\text{-}SiMe_3$ soit ($1,07.10^{-2}$ mole de SiH) et ajout de 5 ml de THF.
Le taux de transformation des liaisons Si-H est de 100 % pour un rapport [Si-H]/[calyseur] = 103, [styrène]/[SiH] = 4,29. On obtient une huile de formule moyenne $Me_3SiO\text{-}[SiMe_2O]_{9,1}\text{-}[Si(Me)(\text{-}CH=CH\text{-}Ph)\text{-}O]_4\text{-}SiMe_3$.

d)

Le même processus expérimental a été utilisé pour 8,34 g de styrène ($8.10^{-2}$ mole soit au total $8,27.10^{-2}$ mole), 5,56 g du polyméthylhydrogénosiloxane décrit dans l'exemple 5-c) soit $2,06.10^{-2}$ mole de SiH) et ajout de 5 ml de THF. Le taux de transformation des liaisons Si-H est de 100 % pour un rapport [SiH]/[calyseur] = 200, [styrène]/(SiH] = 4,13 et on obtient le même polymère que celui décrit dans l'exemple 5-c).

**Exemple 6:**

Le catalyseur est préparé à partir d'une solution mère de $Cp_2ZrCl_2$ (0,230 g, $7,87,10^{-4}$ mole), Mg (0,099 g, $4,07,10^{-3}$ mole) dans 20 ml de THF. La solution est agitée à température ambiante pendant 24 heures et la solution finale est de couleur rouge. Le processus expérimental est ensuite le même que pour l'Exemple 5, avec un temps de réaction de 48 h à 90°C.

a)

Il a été utilisé 2 ml de la solution mère (soit $7{,}86.10^{-5}$ mole de catalyseur) 1,18 g de styrène ($1{,}13.10^{-3}$ mole), 1,86 g de silicone hydrogéno décrit dans l'exemple 1 ($3{,}72.10^{-3}$ mole de SiH) et 5 ml de THF.
Le taux de transformation des liaisons Si-H est de 100 % pour un rapport [Si-H]/[calyseur] = 47, [styrène]/[SiH] = 3. On obtient bien le polymère de formule moyenne :

$$Ph\text{-}CH{=}CH\text{-}SiMe_2\text{-}[SiMe_2O]_{12}\text{-}SiMe_2\text{-}CH{=}CH\text{-}Ph$$

b)

Il a été utilisé 3 ml de la solution mère (soit $1{,}18.10^{-4}$ mole de catalyseur), 17,8 g de styrène (0,171 mole), 9,26 g de l'huile polydiméthylméthylhydrogénosiloxane de formule moyenne $Me_3SiO\text{-}[SiMe_2O]_{9,1}\text{-}[SiMe(H)O]_4\text{-}SiMe_3$ soit ($3{,}43.10^{-2}$ mole de SiH) et 15 ml de THF.
Le taux de transformation des liaisons Si-H est de 94 % pour un rapport [Si-H]/[calyseur] = 290, [styrène]/[SiH] = 4,98.

c)

Il a été utilisé 1,5 ml de la solution mère (soit $5{,}9.10^{-5}$ mole de catalyseur) 5,6 g de styrène ($5{,}36.10^{-2}$ mole), 9,16 de silicone décrit dans l'exemple 1 soit ($1{,}83.10^{-2}$ mole de SiH) et 10 ml de THF.
Le taux de transformation des liaisons Si-H est de 100 % pour un rapport [Si-H]/[calyseur] = 350, [styrène]/[Si-H] = 2,93. On obtient bien sélectivement l'huile de formule moyenne :

$$Ph\text{-}CH{=}CH\text{-}SiMe_2\text{-}[SiMe_2O]_{12}\text{-}SiMe_2\text{-}CH{=}CH\text{-}Ph$$

**Exemple 7:**

Le catalyseur est préparé à partir d'une solution mère de $Cp_2ZrCl_2$ (0,105 g, $3{,}59.10^{-4}$ mole), Mg (0,065 g, $2{,}67.10^{-3}$ mole) dans 5 ml de THF. La solution est agitée à température ambiante pendant 24 heures et la solution finale est de couleur rouge. A 2 ml de cette solution, on ajoute 7 ml de THF et l'huile siloxane décrite dans l'exemple 1 (2,6 g, $5{,}2.10^{-3}$ mole de SiH). Ce mélange de couleur rouge est introduit dans un autoclave préalablement séché sous vide et porté à la température de 90°C sous une atmosphère d'éthylène. Une ligne d'alimentation en éthylène $C_2H_4$, munie d'un régulateur de pression permet de fixer et de garder constante la pression d'éthylène dans le réacteur. Cette pression est alors fixée à 5 bars de $C_2H_4$ avec un temps de réaction de 12 h. à 90°C.

Le taux de transformation des liaisons Si-H de l'huile de départ est de 100 % pour un rapport (Si-H]/[calyseur] = 36. L'analyse par R.M.N. $^1H$ et $^{29}Si$ de l'huile obtenue montre que l'on obtient une huile de formule moyenne :

$$H_2C{=}CH\text{-}SiMe_2\text{-}[SiMe_2O]_{12}\text{-}SiMe_2\text{-}CH{=}CH_2$$

Le pourcentage molaire de fonctions SiVi est supérieur à 95 %.

**Exemple 8:**

Dans un tube de schlenck de capacité 100 ml sous argon on introduit successivement : 0,048 g de $Cp_2ZrCl_2$ ($1{,}64{,}10^{-4}$ moles) ; 0,022 g de magnésium ($9{,}5.10^{-4}$ moles) ; 10 ml de tétrahydrofuranne ; 3,4 g de styrène soit ($3{,}27.10^{-2}$ moles) ; 2,2 g de l'huile silicone hydrogénée polydiméthylméthylhydrogénosiloxane de formule moyenne $Me_3SiO\text{-}[SiMe_2O]_{9,1}\text{-}[SiMe(H)O]_4\text{-}SiMe_3$ soit ($8{,}15{,}10^{-3}$ moles SiH). On chauffe à 90°C pendant 15 heures. On laise revenir à température ambiante et on analyse par R.M.N. le mélange réactionnel. L'huile obtenue correspond à un taux de transformation de 100 % des fonctions hydrogénosilyle SiH et à une formule moyenne :

$$Me_3SiO\text{-}[SiMe_2O]_{9,1}\text{-}[Si(Me)(\text{-}CH{=}CH\text{-}Ph)\text{-}O]_4\text{-}SiMe_3$$

## Revendications

1. Procédé de préparation de polyorganosiloxanes à fonctions insaturées caractérisé en ce qu'on fait réagir un polyorganohydrogénosiloxane (A) contenant au moins 0,1% molaire d'atomes d'hydrogène liés directement au silicium ("SiH"), avec au moins une quantité stoechiométrique d'un composé hydrocarboné (B) présentant au moins une insaturation éthylénique ou acétylénique, en présence d'une quantité catalytiquement efficace d'un catalyseur de déshydrogénocondensation constitué d'un complexe de métal de formule (I)

$$L_n\ M\ R_x Y_y \qquad (I)$$

formule où

. M représente un métal choisi entre le titane, le zirconium et l'hafnium :
. les symboles L sont semblables ou différents et représentent un ligand hydrocarboné du métal M, ledit ligand étant donneur de 3 à 8 électrons $\pi$ sur la couche de valence dudit métal ;
. n est un nombre entier allant de 0 à 3 ;
. les symboles R sont semblables ou différents et représentent un ligand hydrocarboné ou organosilicié du métal M, ledit ligand étant donneur d'électrons $\sigma$ ;
. les symboles Y sont semblables ou différents et représentent un ligand formant avec le métal M une liaison covaiente ;
. x est un nombre entier allant de 0 à 4 ;
. y est un nombre entier allant de 0 à 4 ;

les valeurs respectives des nombres n, x et y étant telles que le nombre d'électrons de la couche de valence du métal M complexé soit inférieur ou égal à 18.

2. Procédé selon la revendication 1) caractérisé en ce que le rapport molaire (B)/(A) est de l'ordre de 1,1 à 100.

3. Procédé selon la revendication 1) ou 2) caractérisé en ce que le polyorganohydrogénosiloxane (A) est linéaire, cyclique ou tridimensionnel et contient des motifs semblables ou différents de formule (II)

$$R'_a\ H_b\ Si\ O_{(4-a-b)/2} \qquad (II)$$

où

- les symboles R' semblables ou différents représentent un groupe alkyle en $C_1$-$C_{18}$, un groupe vinyle, un groupe aryle ou aralkyle en $C_6$-$C_{12}$, éventuellement substitué par des atomes d'halogène ;
- a est égal à 0,1, 2, ou 3 ;
- b est égal à 0 ou 1 ;
- a+b = 0, 1, 2, ou 3 ;

le taux de motifs $SiO_{4/2}$ étant inférieur à 30% en mole
le nombre de motifs de formule (II) dans lesquels b est différent de 0 étant tel que ledit polyorganohydrogénosiloxane (A) contienne au moins 0,1% molaire d'atomes d'hydrogène liés directement au silicium ("SiH").

4. Procédé selon la revendication 3, caractérisé en ce qu'au moins 60 % molaire de radicaux R' représente un groupé méthyle.

5. Procédé selon l'une quelconque des revendications 1) à 4) caractérisé en ce que le composé hydrocarboné insaturé (B) est un alcène linéaire ou ramifié en $C_2$-$C_{24}$, un cycloalcène en $C_6$-$C_{12}$, un alcyne linéaire ou ramifié en $C_2$-$C_{24}$, éventuellement substitué par un ou plusieurs atomes d'halogène et/ou par un ou plusieurs groupements aryles en $C_6$-$C_{12}$, un ester saturé d'acide carboxylique éthyléniquement insaturé, un ester insaturé d'acide carboxylique saturé, un organosilane ou organosiloxane portant des groupements insaturés éthyléniques cu acétyléniques.

**6.** Procédé selon la revendication 5) caractérisé en ce que le composé hydrocarboné insaturé (B) est l'éthylène, l'octène-1, le butadiène-1,4, l'hexadiène-1,5, le decadiène-1,9, les oléfines perfluorées de formule $CF_3$-$(CF_2)_{0-6}$-$(CH_2)_{0-6}$-$CH=CH_2$, le cyclooctadiène-1,5, l'acétylène, l'hexyne-1, le styrène, l'acrylate d'éthyle, le vinyltriméthylsilane, le 1,3-divinyltétraméthyldisiloxane.

**7.** Procédé selon l'une quelconque des revendications 1) à 6) caractérisé en ce que les valeurs respectives des chiffres n, x et y du complexe de formule (I) sont telles que le nombre d'électrons de la couche de valence du métal M complexé soit supérieur ou égal à 8.

**8.** Procédé selon l'une quelconque des revendications 1) à 7) caractérisé en ce que les ligands L du complexe de formule (I) sont les $\eta^3$-allyl, $\eta^5$-cyclopentadienyl, $\eta^7$-cycloheptatrienyl substitués ou non, $\eta^6$ aromatiques substitués ou non.

**9.** Procédé selon l'une quelconque des revendications 1) à 8) caractérisé en ce que les ligands R du complexe de formule (I) sont les groupes alkyles en $C_1$-$C_8$, aryles en $C_6$-$C_{12}$.

**10.** Procédé selon l'une quelconque des revendications 1) à 9) caractérisé en ce que les ligands Y du complexe de formule (I) sont les atomes d'hydrogène, d'halogènes, les groupes alcoxy en $C_1$-$C_4$.

**11.** Procédé seion l'une quelconque des revendications 8) à 10) caractérisé en ce que ledit complexe de formule (I) est le

. bis(cyclopentadienyl)di1-butylzirconium
. tetrabenzylzirconium
. tetraneopentylzirconium
. butoxytris((trimethylsilyl)methyl)zirconium
. dinorbornyldimethyltitanium
. bis(cyclopentadienyl)dimethylzirconium
. cyclcpentadienyltribenzylzirconium
. cyclopentadienyltrimethyltitanium
. cyclopentadienyltrimethylzirconium
. bis(cyclopentadienyl)dineopentyltiianium
. cyclopentadienyldiphenylisopropoxyzirconium
. ((trimethylsilyl)cyclopentadienyl)trimethylzirconium
. bis(cyclopentadienyl)di(trimethylsilyl)zirconium
. bis(cyclopentadienyl)dihydrogénozirconium
. bis(cyclopentadienyl)dihydrogénotitanium
. bis(cyclopentadienyl)chlorohydrogénozirconium
. bis(cyclopentadienyl)butylhydrogénozirconium
. bis(cyclopentadienyl)méthylhydrogénozirconium

**12.** Procédé selon l'une quelconque des revendications 1) à 11) caractérisé en ce que ledit complexe de formule (I) est mis en oeuvre selon des quantités de l'ordre de $1.10^{-5}$ mole à 0,5 mole pour 100 moles de polyorganohydrogénosiloxane (A).

**13.** Procédé selon la revendication 12) caractérisé en ce que le complexe de formule (I) est mis en oeuvre selon des quantités de l'ordre de $1.10^{-4}$ mole à 0,1 mole pour 100 moles de polyorganohydrogénosiloxane (A).

**14.** Procédé selon l'une quelconque des revendications 1) à 13) caractérisé en ce que le complexe de formule (I) est préparé par réduction chimique d'un précurseur approprié à l'aide d'un agent de réduction pris dans le groupe formé par : le magnésium en présence de THF (tétrahydrofuranne) ; les alkyles lithium en solution dans un hydrocarbure saturé ; Li-, Na- ou K-M (M=naphtalène) ; $M'BH_4$ (M'=Li, Na, K) ; un composé alkyl-Mg-halogène ; $NaAlH_2(OCH_2CH_2OCH_3)_2$ ; $LiAlH_4$ ; $LiAlH(alkoxy)_3$ ; $LiHBR_3$ ; $MgH_2$ ; Al ; Zn ; $AlCl_{3-z}(R)_z$ avec z étant un nombre allant de 0 à 2.

## Patentansprüche

1. Verfahren zur Herstellung von Organopolysiloxanen mit ungesättigten Funktionen, dadurch **gekennzeichnet**, daß man ein Organohydrogenopolysiloxan (A), enthaltend mindestens 0,1 Mol-% direkt an das Silicium gebundene Wasserstoffatome (SiH), mit mindestens einer stöchiometrischen Menge einer Kohlenwasserstoffverbindung (B) mit mindestens einer ethylenischen oder acetylenischen Unsättigung in Gegenwart einer katalytisch wirksamen Menge eines Dehydrogenierungikondensationskatalysators, bestehend aus einem Metallkomplex der Formel (I)

$$L_nMR_xY_y \quad (I)$$

umsetzt, worin

. M ein Metall, ausgewählt aus Titan, Zirconium und Hafnium, bedeutet,
. die Symbole L gleich oder verschieden sind und einen Kohlenwasserstoffliganden des Metalls M bezeichnen, wobei der Ligand ein Spender von 3 bis 8 $\pi$-Elektronen in dem Valenzband des Metalls ist.
. n eine ganze Zahl von 0 bis 3 ist,
. die Symbole R gleich oder verschieden sind und einen Kohlenwasserstoff- oder Organosiliciumliganden des Metalls M bezeichnen, wobei der Ligand ein $\sigma$-Elektronenspender ist,
. die Symbole Y gleich oder verschieden sind und einen Liganden bezeichnen, der mit dem Metall M eine covalente Bindung bildet,
. x eine ganze Zahl von 0 bis 4 ist,
. y eine ganze Zahl von 0 bis 4 ist,

wobei die jeweiligen Werte der Zahlen n, x und y so sind, daß die Anzahl der Elektronen des Valenzbandes des komplexierten Metalls M kleiner oder gleich 18 ist.

2. Verfahren nach Anspruch 1, dadurch **gekennzeichnet**, daß das Molverhältnis (B)/(A) im Bereich von 1,1 bis 100 liegt.

3. Verfahren nach Anspruch 1 oder 2, dadurch **gekennzeichnet**, daß das Organohydrogenopolysiloxan (A) linear, cyclisch oder dreidimensional ist und gleiche oder verschiedene Einheiten der Formel (II)

$$R'_aH_bSiO_{(4-a-b)/2} \quad (II)$$

enthält, worin

- die Symbole R' gleich oder verschieden sind und einen $C_1$-$C_{18}$-Alkylrest, eine Vinylgruppe, einen $C_6$-$C_{12}$-Aryloder -Aralkylrest, gegebenenfalls durch Halogenatome substituiert, bezeichnen,
- a den Wert 0, 1, 2 oder 3 hat,
- b den Wert 0 oder 1 hat,
- a+b = 0, 1, 2 oder 3,

wobei der Gehalt der $SiO_{4/2}$-Einheiten kleiner als 30 Mol-% beträgt, wobei die Anzahl der Einheiten der Formel (II), in denen b nicht 0 ist, so ist, daß das Organohydrogenopolysiloxan (A) mindestens 0,1 Mol-% direkt an Silicium gebundene Wasserstoffatome (SiH) enthält.

4. Verfahren nach Anspruch 3, dadurch **gekennzeichnet**, daß mindestens 60 Mol-% der Reste R' eine Methylgruppe bezeichnen.

5. Verfahren nach einem der Ansprüche 1 bis 4, dadurch **gekennzeichnet,** daß die ungesättigte Kohlenwasserstoffverbindung (B) ein linearer oder verzweigter $C_2$-$C_{24}$-Alkenrest, ein $C_6$-$C_{12}$-Cycloalkenrest, ein linearer oder verzweigter $C_2$-$C_{24}$-Alkinrest, gegebenenfalls durch ein oder mehrere Halogenatom(e) und/oder durch eine oder mehrere $C_6$-$C_{12}$-Arylgruppierung(en) substituiert, ein gesättigter Ester einer ethylenisch ungesättigten Carbonsäure, ein ungesättigter Ester einer gesättigten Carbonsäure, ein Organosilan oder Organosiloxan mit ethylenisch oder acetylenisch ungesättigten Gruppierungen ist.

6. Verfahren nach Anspruch 5, dadurch **gekennzeichnet,** daß die ungesättigte Kohlenwasserstoffverbindung (B) Ethylen, 1-Octen, 1,4-Butadien, 1,5-Hexadien, 1,9-Decadien, perfluorierte Olefine der Formel $CF_3$-$(CF_2)_{0\text{-}6}$-$(CH_2)_{0\text{-}6}$-$CH{=}CH_2$, 1,5-Cyclooctadien, Acetylen, 1-Hexin, Styrol, Ethylacrylat, Vinyltrimethylsilan, 1,3-Divinyltetramethyldisiloxan ist.

7. Verfahren nach einem der Ansprüche 1 bis 6, dadurch **gekennzeichnet,** daß die jeweiligen Werte der Ziffern n, x und y des Komplexes der Formel (I) derart sind, daß die Anzahl der Elektronen im Valenzband des komplexierten Metalls M kleiner oder gleich 8 ist.

8. Verfahren nach einem der Ansprüche 1 bis 7, dadurch **gekennzeichnet,** daß die Liganden L des Komplexes der Formel (I) substituiertes oder unsubstituiertes $\eta^3$-Allyl, $\eta^5$-Cyclopentadienyl, $\eta^7$-Cycloheptatrienyl, substituiertes oder unsubstituiertes aromatisches $\eta^6$ sind.

9. Verfahren nach einem der Ansprüche 1 bis 8, dadurch **gekennzeichnet,** daß die Liganden R des Komplexes der Formel (I) $C_1$-$C_8$-Alkylreste, $C_6$-$C_{12}$-Arylreste sind.

10. Verfahren nach einem der Ansprüche 1 bis 9, dadurch **gekennzeichnet,** daß die Liganden Y des Komplexes der Formel (I) Wasserstoffatome, Halogenatome, $C_1$-$C_4$-Alkoxyreste sind.

11. Verfahren nach einem der Ansprüche 8 bis 10, dadurch **gekennzeichnet,** daß der Komplex der Formel (I)

. Bis-(cyclopentadienyl)-di-1-butylzirconium
. Tetrabenzylzirconium
. Tetraneopentylzirconium
. Butoxytris-((trimethylsilyl)methylzirconium
. Dinorbornyldimethyltitanium
. Bis-(cyclopentadienyl)dimethylzirconium
. Cyclopentadienyltribenzylzirconium
. Cyclopentadienyltrimethyltitanium
. Cyclopentadienyltrimethylzirconium
. Bis-(cyclopentadienyl)dineopentyltitanium
. Cyclopentadienyldiphenylisopropoxyzirconium
. ((Trimethylsilyl)cyclopentadienyl)trimethylzirconium
. Bis-(cyclopentadienyl)-di-(trimethylsilyl)zirconium
. Bis-(cyclopentadienyl)dihydrogenzirconium
. Bis-(cyclopentadienyl)dihydrogentitanium
. Bis-(cyclopentadienyl)chlorohydrogenzirconium
. Bis-(cyclopentadienyl)butylhydrogenzirconium
. Bis-(cyclopentadienyl)methylhydrogenzirconium ist.

12. Verfahren nach einem der Ansprüche 1 bis 11, dadurch **gekennzeichnet,** daß der Komplex der Formel (I) in Mengen im Bereich von $1 \cdot 10^{-5}$ mol bis 0,5 mol auf 100 mol Organohydrogenopolysiloxan (A) eingesetzt wird.

13. Verfahren nach Anspruch 12, dadurch **gekennzeichnet,** daß der Komplex der Formel (I) in Mengen im Bereich von $1 \cdot 10^{-4}$ mol bis 0,1 mol auf 100 mol Organohydrogenopolysiloxan (A) eingesetzt wird.

14. Verfahren nach einem der Ansprüche 1 bis 13, dadurch **gekennzeichnet,** daß der Komplex der Formel (I) durch chemische Reduktion eines geeigneten Vorläufers mit Hilfe eines Reduktionsmittels aus der Gruppe Magnesium in Gegenwart von THF (Tetrahydrofuran), Lithiumalkyl in Lösung in einem gesättigten Kohlenwasserstoff, Li-, Na- oder K-M (M = Naphthalin), $M'BH_4$ (M' = Li, Na, K), Alkyl-Mg-Halogen-Verbindung, $NaAlH_2(OCH_2CH_2OCH_3)_2$, $LiAlH_4$, $LiAlH(alkoxy)_3$, $LiHBR_3$, $MqH_2$, Al, Zn, $AlCl_{3\text{-}z}(R)_z$ hergestellt wird, wobei z eine Zahl von 0 bis 2 ist.

## Claims

1. Process for the preparation of polyorganosiloxanes containing unsaturated functional groups, characterized in that a polyorganohydrosiloxane (A), containing at least 0.1 molar % of hydrogen atoms bonded directly to silicon ("SiH"), is reacted with at least a stoichiometric amount of a hydrocarbon compound (B) exhibiting at least one ethylenic

or acetylenic unsaturation, in the presence of a catalytically effective amount of a dehydrogenation/condensation catalyst composed of a metal complex of formula (I)

$$L_nMR_xY_y \quad (I)$$

in which formula

. M represents a metal chosen from titanium, zirconium and hafnium;
. the L symbols are alike or different and represent a hydrocarbon ligand of the metal M, the said ligand being a donor of 3 to 8 $\pi$ electrons to the valence shell of the said metal;
. n is an integer ranging from 0 to 3;
. the R symbols are alike or different and represent a hydrocarbon or organosilicon ligand of the metal M, the said ligand being a donor of $\sigma$ electrons;
. the Y symbols are alike or different and represent a ligand which forms a covalent bond with the metal M; . x is an integer ranging from 0 to 4;
. y is an integer ranging from 0 to 4;

the respective values of the numbers n, x and y being such that the number of electrons of the valence shell of the complexed metal M is less than or equal to 18.

**2.** Process according to claim 1, characterized in that the (B)/(A) molar ratio is of the order of 1.1 to 100.

**3.** Process according to claim 1 or 2, characterized in that the polyorganohydrosiloxane (A) is linear, cyclic or three-dimensional and contains alike or different units of formula (II)

$$R'_aH_bSiO_{(4-a-b)/2} \quad (II)$$

where

- the R' symbols, which are alike or different, represent a $C_1$-$C_{18}$ alkyl group, a vinyl group or a $C_6$-$C_{12}$ aryl or aralkyl group which is optionally substituted by halogen atoms;
- a is equal to 0, 1, 2 or 3 ;
- b is equal to 0 or 1;
- a + b = 0, 1, 2 or 3;

the level of $SiO_{4/2}$ units being less than 30 mol %
the number of units of formula (II) in which b is other than 0 being such that the said polyorganohydrosiloxane (A) contains at least 0.1 molar % of hydrogen atoms bonded directly to silicon ("SiH").

**4.** Process according to claim 3, characterized in that at least 60 molar % of R' radicals represent a methyl group.

**5.** Process according to any one of claims 1 to 4, characterized in that the unsaturated hydrocarbon compound (B) is a linear or branched $C_2$-$C_{24}$ alkene, a $C_6$-$C_{12}$ cycloalkene, a linear or branched $C_2$-$C_{24}$ alkyne, optionally substituted by one or more halogen atoms and/or by one or more $C_6$-$C_{12}$ aryl groups, an ethylenically unsaturated carboxylic acid saturated ester, a saturated carboxylic acid unsaturated ester, or an organosilane or organosiloxane carrying unsaturated ethylenic or acetylenic groups.

**6.** Process according to claim 5, characterized in that the unsaturated hydrocarbon compound (B) is ethylene, 1-octene, 1,4-butadiene, 1,5-hexadiene, 1,9-decadiene, perfluorinated olefins of formula $CF_3$-$(CF_2)_{0-6}$ $(CH_2)_{0-6}$-$CH{=}CH_2$, 1,5-cyclooctadiene, acetylene, 1-hexyne, styrene, ethyl acrylate, vinyltrimethylsilane or 1,3-divinyltetramethyldisiloxane.

**7.** Process according to any one of claims 1 to 6, characterized in that the respective values of the figures n, x and y of the complex of formula (I) are such that the number of electrons of the valence shell of the complexed metal M is greater than or equal to 8.

**8.** Process according to any one of claims 1 to 7, characterized in that the ligands L of the complex of formula (I) are substituted or unsubstituted $\eta^3$-allyl, $\eta^5$-cyclopentadienyl and $\eta^7$-cycloheptatrienyl or substituted or unsubstituted $\eta^6$-aromatics.

**9.** Process according to any one of claims 1 to 8, characterized in that the R ligands of the complex of formula (I) are $C_1$-$C_8$ alkyl groups or $C_6$-$C_{12}$ aryl groups.

**10.** Process according to any one of claims 1 to 9, characterized in that the Y ligands of the complex of formula (I) are hydrogen or halogen atoms or $C_1$-$C_4$ alkoxy groups.

**11.** Process according to any one of claims 8 to 10, characterized in that the said complex of formula (I) is

. bis(cyclopentadienyl)di(1-butyl)zirconium
. tetrabenzylzirconium
. tetraneopentylzirconium
. butoxytris((trimethylsilyl)methyl)zirconium
. dinorbornyldimethyltitanium
. bis(cyclopentadienyl)dimethylzirconium
. cyclopentadienyltribenzylzirconium
. cyclopentadienyltrimethyltitanium
. cyclopentadienyltrimethylzirconium
. bis(cyclopentadienyl)dineopentyltitanium
. cyclopentadienyldiphenylisopropoxyzirconium
. ((trimethylsilyl)cyclopentadienyl)trimethylzirconium
. bis(cyclopentadienyl)di(trimethylsilyl)zirconium
. bis(cyclopentadienyl)dihydridozirconium
. bis(cyclopentadienyl)dihydridotitanium
. bis(cyclopentadienyl)chlorohydridozirconium
. bis(cyclopentadienyl)butylhydridozirconium
. bis(cyclopentadienyl)methylhydridozirconium

**12.** Process according to any one of claims 1 to 11, characterized in that the said complex of formula (I) is made use of in amounts of the order of $1 \times 10^{-5}$ mol to 0.5 mol per 100 mol of polyorganohydrosiloxane (A).

**13.** Process according to claim 12, characterized in that the complex of formula (I) is made use of in amounts of the order of $1 \times 10^{-4}$ mol to 0.1 mol per 100 mol of polyorganohydrosiloxane (A).

**14.** Process according to any one of claims 1 to 13, characterized in that the complex of formula (I) is prepared by chemical reduction of an appropriate precursor using a reducing agent taken from the group formed by: magnesium in the presence of THF (tetrahydrofuran) ; alkyllithiums in solution in a saturated hydrocarbon; Li-, Na- or K-M (M=naphthalene); $M'BH_4$ (M'=Li, Na or K); an alkyl-Mg-halogen compound; $NaAlH_2(OCH_2CH_2OCH_3)_2$; $LiAlH_4$; $LiAlH(alkoxy)_3$; $LiHBR_3$; $MgH_2$; Al; Zn; or $AlCl_{3-z}(R)_z$ with z being a number ranging from 0 to 2.